## Europäisches Patentamt

## European Patent Office

## Office européen des brevets

(19)

(11) Veröffentlichungsnummer: **0 140 320**
**B1**

(12) # EUROPÄISCHE PATENTSCHRIFT

(45) Veröffentlichungstag der Patentschrift:
27.12.89

(51) Int. Cl.⁴: **C 08 F 2/26**

(21) Anmeldenummer: **84112705.3**

(22) Anmeldetag: **22.10.84**

(54) **Mischemulgator für die Emulsionspolymerisation.**

(30) Priorität: **29.10.83 DE 3339407**

(43) Veröffentlichungstag der Anmeldung:
**08.05.85 Patentblatt 85/19**

(45) Bekanntmachung des Hinweises auf die Patenterteilung:
**27.12.89 Patentblatt 89/52**

(84) Benannte Vertragsstaaten:
**AT BE CH DE FR GB IT LI NL**

(56) Entgegenhaltungen:
**DE-A-2 015 660**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Höfer, Rainer, Dr., Klever Strasse 31, D-4000 Düsseldorf 30 (DE)**
Erfinder: **Bartnick, Bernhard, Wiener- Neustädter- Strasse 26, D-4019 Monheim- Baumberg (DE)**
Erfinder: **Schmid, Karl, Dr., Stifterstrasse 10, D-4020 Mettmann (DE)**
Erfinder: **Wegemund, Bernd, Dr., Händelweg 3, D-5657 Haan 1 (DE)**

**Beschreibung**

Die Erfindung betrifft ein neues Verfahren zur Herstellung von Polymerdispersionen mit niederer Oberflächenspannung. Kennzeichnend ist dabei die Verwendung eines Mischemulgators aus α-Sulfocarbonsäure und ihren Estern.

Es sind bereits Emulsionspolymerisationsverfahren bekannt, bei denen α-Sulfofettsäuren oder deren Ester mit niederen Alkoholen als Emulgatoren eingesetzt werden. So beschreibt die US-Patentschrift 2 694 052 die Verwendung sulfonierter und sulfatierter Fettsäureester bei der Homopolymerisation von Vinylacetat in Gegenwart von molekulargewichtsregelnden Substanzen und anorganischen Cyaniden. Wenngleich hierbei stabile Polymerdispersionen (Emulsionen) erhalten werden, so ist doch die breite Anwendbarkeit von Mischemulgatoren aus α-Sulfocarbonsäuren und deren Estern aus dieser Schrift nicht zu entnehmen.

Die Verwendung von Sulfofettsäuren mit weniger als 10 C-Atomen in einem Emulsionspolymerisationsverfahren zur Herstellung von PVC ist Gegenstand der deutschen Patentschrift 842 119. Nach der dort dargestellten technischen Lehre werden jedoch nur grob disperse Suspensionen erhalten. Ein Hinweis auf die Kombination der Säuren mit ihren Estern findet sich nicht. Auch aus den deutschen Offenlegungsschriften 1 720 430 und 1 901 493, welche Verfahren zur PVC-Herstellung in Gegenwart von α-Sulfofettsäuren zum Gegenstand haben, ist der besondere Vorteil des kombinierten Einsatzes von α-Sulfocarbonsäuren zusammen mit ihren Estern nicht zu entnehmen.

Die deutsche Offenlegungsschrift 2 015 660 hat schließlich ein Verfahren zur Herstellung von stippenfreien warmpolymerisierten Kunststoffdispersionen mit hoher Oberflächenspannung zum Gegenstand, bei dem als Polymerisationsemulgator α-Sulfofettsäuren *oder* α-Sulfofettsäureester mit jeweils 10 bis 20 C-Atomen in dem Säurerest und bis zu 3 C-Atomen im Alkoholrest verwendet werden. Wenngleich hier α-Sulfocarbonsäuren wie auch deren Ester als Polymerisationsemulgatoren benannt werden, so ist doch ihre Kombination weder beschrieben noch nahegelegt. Dies ergibt sich auch aus der Tatsache, daß die gemeinsame Verwendung von α-Sulfocarbonsäuren und ihren Estern bei der Emulsionspolymerisation zu Dispersionen mit niederer Oberflächenspannung führt wohingegen die Verwendung der einzelnen Komponenten nach dem Stand der Technik zu Dispersionen mit hoher Oberflächenspannung führt. Aus der DOS 2 015 660 ist demzufolge auch kein Hinweis auf andere Vorteile zum Beispiel die verbesserte Lagerstabilität bei Verwendung der Emulgatorkombination zu entnehmen.

Es ist somit Aufgabe der Erfindung ein verbessertes Verfahren zur Herstellung von Polymerdispersionen mit niederer Oberflächenspannung vorzuschlagen, bei dem Emulgatoren auf Basis von α-Sulfocarbonsäuren beziehungsweise deren Estern eingesetzt werden.

Eine weitere Aufgabe der Erfindung ist die Bereitstellung eines Verfahrens zur Herstellung von besonders stabilen Polymerdispersionen mit α-Sulfocarbonsäuren beziehungsweise deren Estern als Emulgatoren.

Gegenstand der Erfindung ist somit ein Verfahren zur Herstellung von stabilen Polymer-Dispersionen mit niederer Oberflächenspannung durch Emulsionspolymerisation ethylenisch ungesättigter Monomerer in Gegenwart von α-Sulfocarbonsäurealkylestern mit 8 bis 24 C-Atomen im Carbonsäureteil als Emulgatoren sowie üblichen Hilfsstoffen, dadurch gekennzeichnet, daß in Gegenwart eines Mischemulgators aus 99,5 bis 10 Gewichtsteilen eines α-Sulfocarbonsäurealkylesters mit 8 bis 24 C-Atomen im Carbonsäureteil und 1 bis 4 C-Atomen im Alkoholrest *und* 0,5 bis 90 Gewichtsteilen einer α-Sulfocarbonsäure mit 8 bis 24 C-Atomen und gewünschtenfalls von weiteren anionischen und/oder nichtanionischen Emulgatoren und/oder Schutzkolloiden polymerisiert wird, wobei der Mischemulgator ganz oder teilweise in Salzform vorliegen kann und wobei die hergestellten Dispersionen ein Gewichtsverhältnis Polymere zu Wasser zwischen 1 : 5 und 2 : 1 aufweisen.

Das erfindungsgemäße Verfahren zeichnet sich somit durch die Verwendung beziehungsweise Mitverwendung des genannten Mischemulgators aus. Die anderen Verfahrensparameter können vom Fachmann in bekannter Weise an die jeweiligen Erfordernisse angepasst oder frei gewählt werden. Das allgemeine Fachwissen auf dem Gebiet der Emulsionspolymerisation ist beispielsweise von E.W. Duck in Encyclopedia of Polymer Science and Technology, Vol. 5, S. 801 - 856 John Wiley & Sons, New York 1966 und der dort zitierten Literatur dokumentiert. Weiterhin sei verwiesen auf F. Hölscher, Dispersionen Synthetischer Hochpolymerer, Teil 1, Springer Verlag Berlin, Heidelberg, New York (1969) und auf K.O. Calvert (Editor) Polymer Latices and their Applications, Applied Science Publishers Ltd London

Die Herstellung der Mischungsbestandteile des im erfindungsgemäßen Verfahren verwendeten Emulgators ist an sich bekannt. So wird die Herstellung von α-Sulfocarbonsäuren bereits in der US Patentschrift 2 460 968 beschrieben. Danach werden aliphatische Säuren mit mindestens 6 Kohlenstoffatomen mit Chlorsulfonsäure in einem Lösungsmittel sulfoniert, wobei ein leichter Überschuß an Chlorsulfonsäure eingesetzt wird und entstehende Gase (HCl) sowie das Lösungsmittel anschließend durch Destillation entfernt werden.

Die Herstellung von α-Sulfocarbonsäureestern ist in der deutschen Auslegeschrift 1 186 051 sowie in der deutschen Patentschrift 1 248 645 oder der deutschen Offenlegungsschrift 3 047 897 beschrieben. Ein Verfahren zur Herstellung von α-Sulfofettsäureestersalzen schließlich ist in der deutschen Patentschrift 2 544 846 angegeben. Danach geht man von einer Mischung aus 100 Gewichtsteilen eines Alkylesters einer gesättigten Fettsäure, der einen Fettsäurerest mit 8 bis 22 Kohlenstoffatomen und einen Alkoholrest mit 1 bis 6 Kohlenstoffatomen aufweist aus, versetzt mit 0,5 bis 10 Gewichtsprozent eines anorganischen Sulfats in Form seines kristallwasserfreien Pulvers und gibt 1 bis 2 mol $SO_3$ pro mol Fettsäureester gasförmig in Mischung mit einem Inertgas bei Temperaturen bis zu maximal 100°C zu. Salze von α-Sulfofettsäureestern, die als hochkonzentrierte Lösungen in Wasser konfektionierbar sind und höchstens untergeordnete Mengen an freien Säuren enthalten, sind nach einem Verfahren der deutschen Offenlegungsschrift 3 123 681 herstellbar. Es wird dort die Nachveresterung des sulfonierten Produktes durch Zugabe von Alkohol vor der Neutralisation beschrieben. Aus der genannten Offenle-

EP 0 140 320 B1

gungsschrift geht hervor, daß auf dem angesprochenem Fachgebiet das Bestreben herrschte α-Sulfofettsäureester möglichst rein d.h. ohne jegliche Beimengung von α-Sulfofettsäuren herstellen zu können.

Die Bestandteile des im erfindungsgemäßen Polymerisationsverfahren verwendeten Emulgatorgemisches können nach den angegebenen Verfahren aus beliebigen langkettigen Carbonsäuren mit 8 bis 24 C-Atomen hergestellt werden. Bevorzugt sind jedoch α-Sulfoester und Säuren auf Basis von natürlich vorkommenden Fettsäuren, insbesondere gesättigten Fettsäuren. So können die Bestandteile des Mischemulgators aus reinen geradkettigen $C_8$, $C_{10}$, $C_{12}$, $C_{14}$, $C_{16}$, $C_{18}$, $C_{20}$ oder $C_{24}$-Carbonsäuren hergestellt werden. Besonders bevorzugt ist es jedoch, die Komponente des Mischemulgators aus gesättigten Estern natürlich vorkommender Fettsäuren herzustellen. Besonders geeignete Rohstoffe sind hydrierte Kokosfettsäure oder hydrierte Talgfettsäure. Dabei kann die hydrierte Kokosölfettsäure auch durch hydrierte Palmkernölfettsäure ersetzt werden. Die hydrierten Fettsäuren können als solche oder in fraktionierter Form eingesetzt werden. Sollen α-Sulfofettsäuren beziehungsweise deren Ester mit 18 bis 22 Kohlenstoffatomen hergestellt werden, so wird vorzugsweise von dem Härtungsprodukt eines erucasäurereichen Rüböls ausgegangen.

Weiterhin können die Bestandteile des erfindungsgemäß eingesetzten Mischemulgators auch auf Basis synthetischer Carbonsäuren mit 8 bis 24 C-Atomen, insbesondere auf Basis unverzweigter synthetischer Carbonsäuren hergestellt werden.

Die erfindungsgemäß zu verwendenden Mischemulgatoren ihrerseits können durch Vermischen von α-Sulfocarbonsäureestern mit α-Sulfocarbonsäuren hergestellt werden. Es ist jedoch bevorzugt, von α-Sulfocarbonsäureestern auszugehen und durch Hydrolyse der Esterfunktion sich den gewünschten Anteil an freien Säuren in situ herzustellen. Dabei kann die Hydrolyse vor oder bei der Neutralisation erfolgen. Der Hydrolysegrad läßt sich durch verbrauchte Alkalimengen und/oder durch Titration freier Carbonsäuregruppen oder auf spektroskopischem Wege ermitteln.

Das erfindungsgemäße Verfahren verwendet α-Sulfocarbonsäureester mit einem bis 4 C-Atomen in der Alkoholfunktion des Esters. Geeignete Ester sind insbesondere Methyl, Ethyl, Propyl, Isopropyl und Butylester, aber auch Ester oder Partialester des Ethylenglykols, Propylenglykols, Glycerins oder Trimethylolpropans.

Erfindungsgemäß werden Mischemulgatoren aus 99,5 bis 10 Gewichtsteilen eines α-Sulfocarbonsäurealkylesters und 0,5 bis 90 Gewichtsteilen einer α-Sulfocarbonsäure eingesetzt. Bevorzugt ist ein Sulfocarbonsäureesteranteil zwischen 95 und 50 Gewichtsprozent und insbesondere zwischen 90 und 70 Gewichtsprozent entsprechend einem Säureanteil von vorzugsweise 5 bis 50 Gewichtsprozent und insbesondere 10 bis 30 Gewichtsprozent.

Das Verfahren sieht vor, die Mischungen als solche einzusetzen d.h. die Emulgatoren vorzumischen, oder aber gewünschtenfalls beide Emulgatoren getrennt oder zusammen in der Monomerphase oder der wässrigen Phase aufzulösen. Es ist auch möglich, den Ester der Monomerphase und die Säure in der Wasserphase zu lösen und umgekehrt. Bevorzugt werden nicht die freien Säuren, sondern deren Salze eingesetzt beziehungsweise im Falle der α-Sulfocarbonsäuren auch die Disalze. So kann die gesamte Emulgatormenge oder aber ein Teil als Natriumsalz, Kaliumsalz, Lithiumsalz, Magnesiumsalz, Kalciumsalz oder Ammoniumsalz vorliegen. Auch Aminsalze der Emulgatormischungen sind geeignete Emulgatoren. So können Triethylaminsalze, Tetramethylammoniumsalze und insbesondere Alkanolaminsalze beispielsweise Dimethylethanolaminsalze oder Triethanolaminsalze eingesetzt werden. Verwendbar sind weiter die Salze von Trishydroxymethylenmethylamin oder von 2-Methyl-2-aminopropanol beziehungsweise-propandiol.

Bezogen auf Polymeremulsion wird die Emulgatormischung in Mengen von 0,5 bis 7, oder auch bis zu 10 Gewichtsprozent, vorzugsweise 1 bis 5 Gewichtsprozent und insbesondere 1,5 bis 3 Gewichtsprozent eingesetzt. Dabei richtet sich die verwendete Emulgatormenge nach den eingesetzten Monomeren, den sonstigen Verfahrensparametern und den angestrebten Eigenschaften der Polymerdispersion. So werden bei sehr hohen Emulgatormengen vielfach feinteiligere Dispersionen erhalten.

Obwohl die Emulgatormischung sehr gute Eigenschaften als Alleinemulgator zeigt, so können doch auch weitere anionenaktive Coemulgatoren eingesetzt werden. Geeignet sind hier Paraffinsulfonate, Alkylbenzolsulfonate, Alkylnaphthalinsulfonate, Seifen linearer und verzweigter, gesättigte und ungesättigte Fettsäuren, Fettalkohol- und Synthesealkoholsulfate, Alkyldiphenyldisulfonate, Sulfobernsteinsäuremono- und -diester von linearen verzweigten und cyclischen Alkoholen sowie ganz allgemein Sulfate, Sulfonate, Sulfosuccinate, Isethionate, Phosphate und Ethercarbonsäuren der nachstehend genannten nichionogen Emulgatoren. Beim Einsatz des Mischemulgators zusammen mit weiteren anionischen Emulgatoren ist es bevorzugt, die Gesamtemulgatormenge unter 5 Gewichtsprozent bezogen auf Monomere zu halten. Eine weitere Ausführungsform des erfindungsgemäßen Verfahrens sieht vor, die Emulgatormischung in Kombination mit nichtionogen Coemulgatoren einzusetzen. Dies führt zu Dispersionen mit erhöhter Stabilität z.B. gegenüber Scherkräften, Temperatureinflüssen und Elektrolyten. Die nichtionogen Emulgatoren werden in Mengen von 0,5 bis 5 Gewichtsprozent, vorzugsweise 1 bis 3 Gewichtsprozent, bezogen auf Monomere zugegeben. Dabei ist es nach dem erfindungsgemäßen Verfahren möglich, die nichtionogen Emulgatoren zu Beginn der Polymerisation vorzulegen oder sie im Verlauf der Polymerisation zuzudosieren. Eine weitere Arbeitsweise sieht vor, eine Präemulsion unter Verwendung oder Mitverwendung der nichtionogen Emulgatoren herzustellen und diese im Verlauf der Polymerisation zuzudosieren. Es ist auch möglich, zur Nachstabilisierung der erfindungsgemäß hergestellten Dispersionen nichtionogene Emulgatoren zuzufügen. Als nichtionogene Emulgatoren kommen in Frage:

- lineare, verzweigte, cyclische, gesättigte und ungesättigte Alkylpolyglykolether, insbesondere Fettalkoholpolyglykolether

3

EP 0 140 320 B1

- Mono-di- und Trialkylarylpolyglykolether, insbesondere z. B. Octyl- und Nonylphenolpolyglykolether, Dinonylphenolpolyklykolether, Triisobutylphenolpolyklykolether

- Arylpolyglykolether, z. B. Umsetzungsprodukt von Phenol mit 3 bis 10 mol Ethylenoxid

- Polyglykolether von Hydroxyalkanolen, wie in der älteren deutschen Patentanmeldung 3 319 782.2 beschrieben

- Carbonsäurepolyglykolester, insbesondere Fettsäurepolyglykolester

- Fettsäurealkanolamid-EO-Addukte, insbesondere Kokosfettsäuremonoethanolamid-EO-Addukte

- EO/PO-Blockpolymere, beispielsweise Pluronics® und Tetronics®

- ethoxylierte Sorbitanester, insbesondere Sorbitanmonolaurat + 20 EO

- ethoxylierte Fettamine

Nach einer weiteren Ausführungsform des erfindungsgemäßen Verfahrens kann die Emulgatormischung auch zusammen mit Schutzkolloiden eingesetzt werden. Als Schutzkolloide sind dazu beispielsweise vollständig oder teilweise verseifte Homo- und/oder Copolymere des Vinylacetats geeignet, so z. B. teilverseiftes Polyvinylacetat oder vollständig verseifte Copolymere aus Vinylacetat und Vinylethern. Bevorzugte Copolymere haben 1 bis 4 C-Atome im Etherteil des Polyvinylethers. Weitere Schutzkolloide leiten sich beispielsweise von Polysacchariden ab. So sind insbesondere Celluloseether geeignet, wie Hydroxyethylcellulose, Hydroxypropylcellulose, Carboxymethylcellulose, Methylcellulose oder Mischether. Weiterhin geeignet sind Polyacrylamid sowie dessen Copolymere mit Acrylsäure, Acrylnitril oder Acrylestern. Auch Kondensationsprodukte aus Naphthalinsulfonsäure und Formaldehyd oder andere wasserlösliche Formaldehydharze zum Beispiel Harnstoff-Formaldehyd-Harze können verwendet werden. Schließlich sind Casein, Gelatine, Gummi arabicum, natürliche und substituierte Stärkederivate, wie Hydroxyethylstärke, geeignete Schutzkolloide.

Erfindungsgemäß können zur Dispersionsherstellung in Kombination mit den Mischemulgatoren auch sogenannte einpolymerisierbare Emulgatoren - zutreffender als stabilisierende Monomere bezeichnet - eingesetzt werden. Hier sind Vinylsulfonat, Allylsulfonat, 2-Acrylamido-2-methylpropansulfonsäure, Vinylphosphonsäure, die Acryl- und Methacrylester nichtionischer Emulgatoren oder Styrolsulfonsäure geeignet.

Nach dem erfindungsgemäßen Verfahren können fast alle technisch wichtigen im wesentlichen wasserunlöslichen Monomeren zu Dispersionen verarbeitet werden. So ist das Verfahren geeignet für die Emulsionspolymerisation von Vinylaromaten, wie Styrol, Divinylbenzol oder Vinyltoluol von polymerisierbaren Olefinen und Diolefinen wie Propen, Butadien oder Isopren von Estern der Acrylsäure oder Methacrylsäure mit linearen oder verzweigten Alkoholen mit einem bis 18 C-Atomen, insbesondere von Alkoholen mit 1 bis 8 C-Atomen und bevorzugt von deren Methylestern, Ethylestern und Butylestern. Weiterhin können Vinylester von Säuren mit 2 bis 12 C-Atomen erfindungsgemäß der Emulsionspolymerisation unterworfen werden. Insbesondere Vinylacetat, Vinylpropionat sowie Vinyl-2-Ethylhexanat. Weitere geeignete Vinyl-Verbindungen sind Vinylalkylether, die Alkylgruppen mit 1 bis zu 8 C-Atomen aufweisen. Fernerhin sind Vinylchlorid und Vinylidenchlorid geeignete Monomere. Die vorgenannten Monomeren können in Gegenwart der Mischemulgatoren der Homopolymerisation oder der Copolymerisation mit anderen der genannten Verbindungen unterworfen werden. Weiterhin können Copolymerisationen durchgeführt werden, bei denen bis zu 50 Gewichtsprozent weiterer an sich teilweise oder vollständig wasserlöslicher Monomerer zugegen sind. Hierfür kommen die folgenden Monomeren in Frage: Acrylnitril, Methacrylnitril, Halbester der Maleinsäure beziehungsweise Fumarsäure mit 1 bis 8 Kohlenstoffatomen, Acrylsäure, Methacrylsäure, Maleinsäure, Fumarsäure, Crotonsäure und/oder Itaconsäure.

Die erfindungsgemäß hergestellten Dispersionen weisen ein Gewichtsverhältnis Polymere zu Wasser zwischen 1 : 5 und 2 : 1 auf. Bevorzugt liegt das Gewichtsverhältnis jedoch zwischen 1 : 3 und 1 : 1.

Erfindungsgemäß können auch weitere übliche Polymerisationshilfsstoffe mitverwendet werden. Hier sind in erster Linie die Initiatoren zu nennen. Verwendet werden können anorganische Peroxidverbindungen wie zum Beispiel Kalium-oder Ammoniumpersulfat oder Wasserstoffperoxid. Weiterhin können organische Peroxidverbindungen oder organische Azoverbindungen, soweit sie für die Emulsionspolymerisation geeignet sind, verwendet werden. Die Initiatoren werden in üblichen Mengen d.h. von 0,05 bis 2 Gewichtsprozent, vorzugsweise von 0,1 bis 0,5 Gewichtsprozent eingesetzt. Als weitere Hilfsstoffe seien Puffersubstanzen wie Natriumhydrogencarbonat, Natriumpyrophosphat oder Natriumacetat, die in Mengen bis zu 2 Gewichtsprozent eingesetzt werden können, genannt. Auch Beschleuniger wie Formaldehydsulfoxylat können verwendet werden. Weiterhin können die üblicherweise bei der Emulsionspolymerisation verwendeten Molekulargewichtsregler zum Beispiel Butenol oder auch organische Thioverbindungen wie Mercaptoethanol, Thioglykolsäure, Octylmercaptan oder tert. Dodecylmercaptan verwendet werden. Für die Durchführung des erfindungsgemäßen Verfahrens kommen verschiedene bei der Emulsionspolymerisation üblicherweise angewandte Fahrweisen in Betracht, beispielsweise Gesamtvorlage, Monomerenzulauf oder Emulsionszulauf. Im allgemeinen wird dazu die Temperatur des Polymerisationsmediums in einem Bereich von 40 bis 100°C, vorzugsweise 50 bis 90°C, gehalten. Als pH-Wert wird zweckmäßigerweise ein Bereich zwischen 3 und 9 eingehalten.

Das erfindungsgemäße Verfahren wird zweckmäßigerweise in kühl- und heizbaren, mit Rührer und Temperaturmessung versehenen Behältern, beispielsweise in Rührdruckkesseln, durchgeführt. Die Verwendung von Rohr-

4

schlangen-Reaktoren oder sogenannten Loop-Reaktoren ist jedoch ebenfalls möglich.

Nach Beendigung der Polymerisation wird die Polymerisatdispersion zweckmäßigerweise abgekühlt und über Siebeinrichtungen aus dem Kessel gelassen. Soll das Festprodukt isoliert werden, dann wird die Polymerisatdispersion zweckmäßigerweise ausgefällt oder sprühgetrocknet. Bevorzugt ist jedoch eine direkte Verwendung der Dispersionen als Bindemittel für Farben, Klebstoffe und andere Beschichtungszwecke.

Der erfindungsgemäße Einsatz der Mischemulgatoren als anionische Alleinemulgatoren bei der Emulsionspolymerisation führt zu Polymerdispersionen, die im Vergleich zu solchen auf Basis von zum Beispiel n-Dodecylbenzolsulfonat oder Fettalkoholsulfaten verbesserte Stabilität aufweisen. Weiterhin erlaubt die Emulgatormischung durch Einstellen des Mengenverhältnisses zwischen α-Sulfocarbonsäureester und α-Sulfocarbonsäure in weiten Bereichen die Steuerung der Teilchengrößen. Es werden Dispersionen mit niedriger Oberflächenspannung erhalten, die zum Beispiel als Schaumlatices verwendet werden können. Die Kombination der Mischemulgatoren aus α-Sulfocarbonsäureestern und α-Sulfocarbonsäuren mit nichtionischen Co-Emulgatoren führt zu Dispersionen mit erhöhter Stabilität, zum Beispiel gegenüber Scherkräften, Temperatureinflüssen und Elektrolyten.

## Beispiele

### Geprüfte erfindungsgemäß eingesetzte Emulgatoren

1. α-Sulfo-C 12-fettsäure, Di-Na-Salz/α-Sulfo-C12-fettsäuremethylester, Na-Salz-Gemisch im Verhältnis 22 : 88 als 39,4-prozentige wäßrige Lösung

2. α-Sulfo-C12/C18-fettsäure, Di-Na-Salz/α-Sulfo-C12/C18-fettsäuremethylester, Na-Salz-Gemisch im Verhältnis 19,6 : 80,4 als 36,9-prozentige wäßrige Lösung.

3. α-Sulfo-C16/C18-fettsäure [x]) Di-Na-Salz/α-Sulfo-C16/C18-fettsäuremethylester, [x]) Na-Salz-Gemisch im Verhältnis 3,3 : 96,7 als 28,7-prozentige wäßrige Lösung.

4. α-Sulfo-C16/C18-fettsäure, [x]) Di-Na-Salz/α-Sulfo-C16/C18-fettsäuremethylester, [x]) Na-Salz-Gemisch im Verhältnis 17,2 : 82,8 als 28,5-prozentige wäßrige Lösung.

5. Wie 4, Mischungsverhältnis 18,7 : 81,3 als 29,4-prozentige wäßrige Lösung.

6. Wie 4, Mischungsverhältnis 20 : 80 als 30-prozentige wäßrige Lösung.

7. α-Sulfo-C16/C18-fettsäure im Gemisch mit ihrem Methylester (20 : 80 mol-%) als Magnesiumsalz.

[x] Basis: gehärtete Talgfettsäure

## 1. n-Butylacrylat-Acrylsäure-Copolymer

### Anfängliche Reaktorbefüllung

446,8  g vollentsalztes Wasser
1,0  g Kaliumperoxodisulfat
12,2  g erfindungsgemäßer Emulgator

### Katalysatordosierung

1,0  g Natriumdisulfat
49,0  g Wasser

### Monomerdosierung

480,0  g Butylacrylat
10,0  g Acrylsäure

### Zusatz zur fertigen Polymerdispersion

10,0  g Ammoniak zur pH-Einstellung auf ca. 7 bis 8

### Apparatur

Die Polymerisation wurde drucklos in einem 2-l-Glasautoklaven mit Ankerrührer durchgeführt.

## Verfahren

- anfängliche Reaktorbefüllung vorlegen
- jeweils 10 % der Mengen Katalysatordosierung und Monomerdosierung zudosieren
- Heizbad auf 75°C
- Polymerisationsstart erfolgt bei 60 bis 65 °C (exotherm)
- Zudosierung der Mengen Katalysatordosierung und Monomerdosierung synchron
- Zudosierzeit ca. 1 Stunde und 30 min
- nach Beendigung der Monomer/Katalysatordosierung wird ca. 2 Stunden bei einer Heizbadtemperatur von 90°C (Reaktorinnentemperatur ca. 80°C) nachpolymerisiert.
- Abkühlung auf < 30 °C
- bei ca. 30°C wird die Polymerdispersion mit Ammoniak (25-prozentig) auf einen pH-Wert von ca. 7 bis 8 eingestellt.

## Auswertung

| Geprüfter Emulgator | Koagulat | Lagerstabilität |
|---|---|---|
| 1 | < 0,1 % | 3 Wochen |
| 3 | < 0,1 % | 3 Wochen |
| 6 | < 0,1 % | 3 Wochen |

## Vergleichsbeispiele:

| | | |
|---|---|---|
| n-Dodecylbenzolsulfonat 75-prozentige Paste | < 0,1 % | 24 Stunden |
| n-Dodecylbenzolsulfonat 96-prozentiges Pulver | < 0,1 % | 24 Stunden |
| C14/C18-Alkansulfonat Na-Salz | < 0,1 % | 2 - 3 Tage |

## 2. n-Butylacrylat-Homopolymer

Die Versuche nach Beispiel 1 wurden wiederholt. Im Gegensatz zu I wird jedoch nach der Neutralisation mit 40 g einer 25-prozentigen wäßrigen Lösung von Nonylphenol + 10 EO (nichtionogener Emulgator gemäß 1) nachstabilisiert.

## Auswertung

| Geprüfter Emulgator: | 1 | 2 | 3 | 4 | 6 | 7 |
|---|---|---|---|---|---|---|
| % Trockenrückstand | | | | | | |
| Theorie | 49,2 | 49,2 | 49,2 | 49,2 | 49,2 | 49,2 |
| Praxis | 49,6 | 49,7 | 49,1 | 49,0 | 49,1 | 48,3 |
| Koagulat noch der Polymerisation | 0 | 0 | 0 | 0 | 0,2 | 3 |
| Teilchengröße (Coulter Nano-Sizer) in Nanometer | 101 | 113 | 108 | 103 | 102 | 200[x] |
| Polymerdispersität | 2 - 3 | 3 | 3 - 4 | 2 - 5 | 2 - 3 | - |
| mechan. Stabilität | | | | | | |
| min | 30 | 30 | 30 | 30 | 30 | |
| % Koagulat | 0 | 0 | 0 | 0 | 0 | |
| Viskosität Brookfield bei 25°C | | | | | | |
| Spindel | 3 | 3 | 3 | 3 | 2 | - |
| RPM | 20 | 20 | 20 | 20 | 20 | - |
| mPa · s | 2800 | 950 | 1650 | 2600 | 300 | - |
| pH-Wert | 7,6 | 8,2 | 7,5 | 7,3 | 8,4 | 8,0 |
| Lagerstabilität in Monaten | > 6 | > 6 | > 6 | > 6 | >6 | > 2 |

[x]) Teilchengröße elektronenmikroskopisch, Oberflächenspannung 34,7 $m^N/m$

In einem Vergleichsversuch ergab ein α-Sulfomethylesterfreies α-Sulfo-C16/18-fettsäure-Di-Na-Salz in gleicher Konzen-

6

tration als Emulgator eingesetzt und in gleicher Weise mit Nonylphenol + 10 EO nachstabilisiert eine gegenüber Scherbelastung instabile Dispersion mit einer wesentlich geringeren Lagerstabilität von nur etwa 4 Wochen.

**Beispiel 2a**

**n-Butylacrylat-Homopolymer**

Die Versuchsserie 2 wurde mit Abmischungen von α-Sulfo-$C_{12}$/$C_{18}$-fettsäure, Di-Na-Salz (a) /α-Sulfo-$C_{12}$/$C_{18}$-fettsäuremethylester, Na-Salz (b), in unterschiedlichen Mischungsverhältnissen wiederholt. Die Teilchengröße der entstandenen Latexteilchen wurde im Coulter-Nano-Sizer ermittelt.

Die folgende Tabelle zeigt die Abhängigkeit der Latexteilchendurchmesser vom Mischungsverhältnis und damit die Steuerbarkeit dieses Parameters durch Veränderung der Emulgatormischung.

| Mischungsverhältnis α-Sulfo-$C_{12}$/$C_{18}$-fettsäure,Di-Na-Salz, α-Sulfo-$C_{12}$/$C_{18}$-fettsäuremethylester, Na-Salz | Mischung | Latexteilchendurchmesser (nm) |
|---|---|---|
| 3,2 : 96,8 | a | 99 |
| 7,5 : 92,5 | b | 123 |
| 20 : 80 | c | 232 |
| 50 : 50 | d | 265 |

**3. Vinylacetat-Vinylversatat-Copolymer**

**Anfängliche Reaktorbefüllung**

250,0 g vollentsalztes Wasser )
  1,4 g anionaktiver Emulgator, 100-prozentig ) pH-Wert
  0,5 g Kaliumperoxodisulfat )ca- 9
  0,5 g Borax )

**Wäßrige Phase der Monomer-Präemulsion**

261,8 g   vollentsalztes Wasser
  1,8 g   anionaktiver Emulgator, 100-prozentig
12,0 g   nichtionogener Emulgator, 100-prozentig
  2,0 g   Kaliumperoxodisulfat
  2,0 g   Borax

**Monomergemisch der Präemulsion**

343,0 g   Vinylacetat
141,0 g   VeoVa 10® (Fa. Shell)
        (Vinylester einer verzweigten $C_{11}$-Carbonsäure)
  4,0 g   Acrylsäure

pH-Wert der fertigen Polymerdispersion = ca. 4 - 5

**Zusatz zur fertigen Polymerdispersion**

  20,0 g   Ammoniumcarbonatlösung, 10-prozentig in Wasser
1040,0 g   Polymerdispersion

**Apparatur**

s. 1

**Verfahren**

Die Reaktorbefüllung wird auf 80°C erhitzt und die Monomer-Präemulsion hergestellt, indem das Monomergemisch unter Rühren der wäßrigen Phase zugefügt wird. Der pH-Wert dieser Präemulsion sollte bei 3,8 bis 4,0 liegen. Sobald die Temperatur des Reaktionsgemisches 80°C erreicht hat, wird die Monomer-Präemulsion über einen Zeitraum von zwei bis zweieinhalb Stunden hinzugefügt.

Nach beendeter Zugabe wird die Temperatur des Reaktionsgemisches weitere zwei Stunden bei 80°C gehalten. Die Dispersion wird abgekühlt und filtriert.

## Auswertung

Geprüfte Emulgatoren:

| | | | | |
|---|---|---|---|---|
| anionaktiver Emulgator | 6 | 6 | 6 | |
| nichtionogener Emulgator | Nonylphenol | Talgfett + 20 EO | Nonylphenol alkohol + 8 EO | + 30 EO |
| % Koagulat nach der Polymerisation | | 0,1 | 0,1 | 0,1 |
| Teilchengröße der Dispersion in Nanometer | | ca. 150 | 169 | 149 |
| pH-Wert | | 4,3 | 3,9 | 4,0 |
| mechan. Stabilität min | | 30 | 30 | 30 |
| % Koagulat | | 0 | 0 | 0 |
| Viskosität Brookfield bei 25°C, mPa · s | | 620 | 404 | 405 |
| % Wasseraufnahme | | 11,1 | n.b. | 11,0 |
| % Quellung | | 11,8 | n.b. | 11,7 |
| Elektrolytstabilität in % Koagulat | | | | |
| NaCl | 1 % | 0 | 0 | 0 |
| NaCl | 10 % | 0 | 100 | 0 |
| CaCl$_2$ | 1 % | 0 | 0 | 0 |
| CaCl$_2$ | 10 % | 0 | 100 | 0 |
| Pb(NO$_3$)$_2$ | 1 % | 0 | 0 | 0 |
| Pb(NO$_3$)$_2$ | 10 % | < 50 | 100 | 0 |
| Al$_2$(SO$_4$)$_3$ | 1 % | 0 | 0 | 0 |
| Al$_2$(SO$_4$)$_3$ | 10 % | < 50 | 100 | 100 |
| Filmbeurteilung bei Raumtemperatur | | klar, transparent | klar, transparent | klar, transparent |
| bei 105°C | | gelblich, transparent | gelblich, transparent | gelblich, transparent |

## 4. Butylacrylat-Styrol-Methacrylsäure-Copolymer

### Anfängliche Reaktorbefüllung

558,0 g   vollentsalztes Wasser
  2,0 g   Ammoniumperoxodisulfat
  7,5 g   anionaktiver Emulgator, 100-prozentig

### Katalysatordosierung

  1,0 g   Ammoniumperoxodisulfat
 49,0 g   vollentsalztes Wasser

### Monomerdosierung

255,0 g   Butylacrylat
225,0 g   Styrol
 20,0 g   Methacrylsäure

**Zusatz zur fertigen Polymerdispersion**

ca. 18,5 g Ammoniak, 25 prozentig (pH-Wert auf ca. 8 einstellen)

**Apparatur**

s. 1

**Verfahren**

- anfängliche Reaktorbefüllung vorlegen
- jeweils 10 % der Mengen Katalysatordosierung und Monomerdosierung zudosieren
- Heizbad auf 90°C
- Polymerisationsstart erfolgt bei ca. 60°C (exotherm)
- Zudosierung der mengen Katalysatordosierung und Monomerdosierung synchron
- Dosierzeit ca. 45 min, nach ca. 9/10 der Monomerzudosierung erfolgt eine starke Zunahme der Viskosität und deutlich exothermer Temperaturverlauf, die Reaktorinnentemperatur steigt von ca. 90°C auf 94 bis 97°C bei einer Heizbadtemperatur von 90°C.
- nach Beendigung der Monomer/Katalysatordosierung wird 1 bis 2 Stunden bei einer Heizbadtemperatur von ca. 105 °C nachpolymerisiert.
- Abkühlung
- bei ca. 50 °C wird die Polymerdipersion mit Ammoniak (25-prozentig) auf einen pH-Wert von ca. 8 oder mehr eingestellt
- die Dispersion wird durch einen 80-micron-Siebbeutel filtriert

2)    =  starke Schaumbildung
V+   =  Vergleichsbeispiel    (1,5 % 100-prozentiges $\alpha$-Sulfo-fettsäure-Di-Na-salz; Basis: hydrierte Palmkernölfettsäure)
v$^{++}$  =  Vergleichsbeispiel    (1,5 % 100-prozentiges $\alpha$-Sulfo-C16/18(1 : 1)fettsäure Di-Na-Salz)

Wie in den Beispielen 1, 2 und 3 zeigen die erfindungsgemäßen Emulgatoren auch in der Styrol/Butylacrylat-Copolymerisation ein ausgezeichnetes Emulgatorverhalten. Insbesondere ergeben sie gegenüber den angeführten Vergleichsbeispielen, methylestersulfonatfreie $\alpha$-Sulfofettsäure-Di-Na-Salze, niedrigere Oberflächenspannungen der Dispersion und eine bessere mechanische Stabilität der Latices.

**Beispiel 5**

**Styrol-Homopolymer/Batch-Verfahren**

Ansatz:

| | |
|---|---|
| VE-Wasser | 473,36 g |
| Emulgator (100 % AS) | 5,24 g |
| 2-prozentige wäßrige $K_2S_2O_8$-Lösung | 52,6 g |
| Styrol | 225,0 g |

**Apparatur:**

s. Beispiel 1

**Verfahren:**

Der Emulgator bzw. die Emulgatormischung wird in der angegebenen Menge VE-Wasser gelöst, die Initiator-Lösung wird zugegeben und der Reaktor bei RT unter Rühren 1/2 Stunde mit $N_2$ gespült. Anschließend wird Styrol zudosiert und mit dem Aufheizen begonnen. Die Mantelheizung wird auf 75°C eingestellt und der Ansatz bei einer Innentemperatur von 70°C innerhalb 7 Stunden polymerisiert.

Als Emulgatoren wurden die bereits in Beispiel 2 a verwendeten Mischungen eingesetzt.

| Mischung | a | c | d | Vergleichsversuch: $C_{12}$-Fettalkoholsulfat |
|---|---|---|---|---|
| Teilchengröße (elektronen-mikroskopisch (nm) | 57,7 | 61,8 | 65,2 | 72 |

**Prüfmethoden**

**1 Koagulatgehalt nach der Herstellung**

Die fertiggestellte Dispersion wird durch einen tarierten Perlonsiebbeutel der Firma Schwegmann mit 80 micron Maschenweite abgefüllt. Der Siebbeutel mit evtl. vorhandenem Koagulat wird 24 Stunden bei 105°C getrocknet und das Koagulat durch Differenzwägung bestimmt.

**2 Bestimmung der Teilchengröße**

Die Teilchengröße wird nach folgenden Maßstäben bestimmt:
- visuell:

| | |
|---|---|
| milchig-weiße Dispersion | = oberhalb 1 micron |
| bläulich-weiße bis | = 1 micron bis 0,1 micron |
| bräunlich-weiße Disuersion | |
| grau-weiße, semitransparente Dispersion | = 0,1 micron bis 0,05 micron |
| praktisch transparente Dispersion | = unter 0,05 micron |

- Bestimmung des mittleren Teilchengrößenbereichs durch automatische Messung im Coulter Nano-Sizer
- Bestimmung der Teilchendurchmesser durch transmissionselektronenmikroskopische Fotografien

**3 Polymerdispersität**

Bei der Polymerdispersität wird die Teilchengrößenverteilung einer Dispersion klassifiziert. Die Teilchengrößenverteilung wird einem Zahlenwert von 0 bis 9 zugeordnet, wobei der Zahlenwert 0 bis 1 ausschließlich monodispers und der Zahlenwert 8 bis 9 ausschließlich polydispers bedeutet.

**4 Trockengehalt**

Trockenrückstandsbestimmungswaage (Fa. Satorius), Typ 709301. Der Feststoffgehalt wird bei Stufe 7 und 20 min Trockenzeit bestimmt. Die Einwaage beträgt ca. 5 g.

**5 pH-Wert**

Der pH-Wert wird mit einem handelsüblichen pH-Meter bestimmt.

**6 Viskosität**

Die Viskosität wird mit einem Brookfield-Viskosimeter vom Typ RVT bei 25°C gemessen.

**7 Mechanische Stabilität**

80 g der Dispersion werden 30 min bei 14.000 Upm mit einem Klaxon-Rührer, Typ HM 5 UB 2 (Klaxon Ltd.), gerührt und anschließend durch einen 80-micron-Siebbeutel der Firma Schwegmann filtriert. Der Koagulatanteil wird durch Trocknung und Differenzwägung des evtl. im Siebbeutel verbliebenen Koagulats bestimmt (analog ASTM D 1076).

**8 Elektrolytstabilität**

Je 10 ml der unverdünnten Dispersion werden mit je 10 ml folgender Salz-(Elektrolyt-)Lösungen versetzt:

| | |
|---|---|
| Natriumchloridlösung | 1-prozentig und 10-prozentig |
| Calciumchloridlösung | 1-prozentig und 10-prozentig |
| Bleinitratlösung | 1-prozentig und 10-prozentig |
| Aluminiumsulfatlösung | 1-prozentig und 10-prozentig |

**9 Bestimmung der prozentualen Wasseraufnahme und Quellung**

Wasseraufnahme:

Geprüft werden je drei Dispersionsfilme der Abmessung 75 x 35 x 0,5 mm. Die Filme werden gekennzeichnet, 48 Stunden im Umluftofen bei 50°C getrocknet, anschließend gewogen und danach in deionisiertem Wasser gelagert. Je

# EP 0 140 320 B1

nach Anforderung werden die Dispersionsfilme nach 24- und 48- oder x-stündiger Wasserlagerung vorsichtig durch Betupfen mit Zellstofftüchern getrocknet, dann gewogen und die Gewichtszunahme in Prozenten ausgerechnet.

Quellung:

Der prozentuale Zahlenwert der Quellung errechnet sich: % Quellung = Gewichtsprozent Wasseraufnahme X Dichte der Polymerdispersion.

**Filmbeurteilung**

Mit einem Ziehlineal (ca. 1 mm Spalthöhe) werden zwei Filme ausgezogen.
Ein Film wird 48 Stunden bei Raumtemperatur getrocknet, der andere Film 24 Stunden bei 105°C.

**Patentansprüche**

1. Verfahren zur Herstellung von stabilen Polymer-Dispersionen mit niederer Oberflächenspannung durch Emulsionspolymerisation ethylenisch ungesättigter Monomerer in Gegenwart von α-Sulfocarbonsäurealkylestern mit 8 bis 24 C-Atomen im Carbonsäureteil als Emulgatoren sowie üblichen Hilfsstoffen, dadurch gekennzeichnet, daß in Gegenwart eines Mischemulgators aus
99,5 bis 10 Gewichtsteilen eines α-Sulfocarbonsäurealkylesters mit 8 bis 24 C-Atomen im Carbonsäureteil und 1 bis 4 C-Atomen im Alkoholrest *und*
0,5 bis 90 Gewichtsteilen einer α-Sulfocarbonsäure mit 8 bis 24 C-Atomen und gewünschtenfalls von weiteren anionischen und/oder nichtanionischen Emulgatoren und/oder Schutzkolloiden polymerisiert wird, wobei der Mischemulgator ganz oder teilweise in Salzform vorliegen kann und wobei die hergestellten Dispersionen ein Gewichtsverhältnis Polymere : Wasser zwischen 1 : 5 und 2 : 1 aufweisen.

2. Verfahren nach Anspruch 1, dadurch gekennzeichnet, daß in Gegenwart eines Mischemulgators aus 95 bis 50 Gewichtsteilen, vorzugsweise 90 - 70 Gewichtsteilen des α-Sulfocarbonsäurealkylesters mit 8 bis 24, vorzugsweise 12 bis 18 C-Atomen in Carbonsäureteil *und* 5 bis 50 Gewichtsteilen, vorzugsweise 10 bis 30 Gewichtsteilen der α-Sulfocarbonsäure mit 8 bis 24 C-Atomen, vorzugsweise 12 bis 18 C-Atomen polymerisiert wird.

3. Verfahren nach den Ansprüchen 1 und 2, dadurch gekennzeichnet, daß der Mischemulgator ganz oder teilweise als Alkalisalz, Magnesiumsalz, Kalziumsalz und/oder Ammoniumsalz eingesetzt wird.

4. Verfahren nach den Ansprüchen 1 bis 3, dadurch gekennzeichnet, daß der Mischemulgator in Mengen von 0,5 bis 10 Gewichtsprozent, vorzugsweise von 1 bis 5 Gewichtsprozent und insbesondere von 1,5 bis 3 Gewichtsprozent, bezogen auf Polymerdispersion eingesetzt wird.

5. Verfahren nach den Ansprüchen 1 bis 4, dadurch gekennzeichnet, daß der Mischemulgator zusammen mit einem anionischen Coemulgator und gewünschtenfalls einem nicht ionischen Coemulgator eingesetzt wird, wobei vorzugsweise die Gewichtsmenge des Mischemulgators die der Coemulgatoren übersteigt.

6. Verfahren nach den Ansprüchen 1 bis 5, dadurch gekennzeichnet, daß der Mischemulgator zusammen mit einem nichtionischen Emulgator eingesetzt wird, wobei die Menge des Mischemulgators vorzugsweise die Menge des nichtionischen Emulgators übersteigt.

7. Verfahren nach den Ansprüchen 1 bis 6, dadurch gekennzeichnet, daß der Mischemulgator zusammen mit einem Schutzkolloid eingesetzt wird.

8. Verfahren nach den Ansprüchen 1 bis 7, dadurch gekennzeichnet, daß Polymerdispersionen auf Basis von Vinylaromaten, Monoolefinen, Diolefinen, Acryl- bzw. Methacrylsäurederivaten, Vinylestern, Vinylethern, Vinylhalogeniden und/oder deren Mischungen hergestellt werden.

9. Verfahren nach den Ansprüchen 1 bis 8, dadurch gekennzeichnet, daß die Emulsionspolymerisation in Gegenwart von bis zu 10 Gewichtsprozent an wasserlöslichen ethylenisch ungesättigten Carbonsäuren durchgeführt wird.

10. Verfahren nach den Ansprüchen 1 bis 9, dadurch gekennzeichnet, daß das Gewichtsverhältnis Polymere zu Wasser im Bereich 1 : 4 bis 2 : 1, vorzugsweise 1 : 3 bis 1 : 1 liegt.

**Claims**

1. A process for the production of stable polymer dispersions of low surface tension by the emulsion polymerization of ethylenically unsaturated monomers in the presence of α-sulfocarboxylic acid alkyl esters containing from 8 to 24 carbon atoms in the carboxylic acid portion as emulsifiers and in the presence of standard auxiliaries, characterized in that polymerization is carried out in the presence of a mixed emulsifier of

from 99.5 to 10 parts by weight of an α-sulfocarboxylic acid alkyl ester containing from 8 to 24 carbon atoms in the carboxylic acid portion and from 1 to 4 carbon atoms in the alcohol portion *and*

from 0.5 to 90 parts by weight of an α-sulfocarboxylic acid containing from 8 to 24 carbon atoms and, if desired, other anionic and/or non-anionic emulsifiers and/or protective colloids, the mixed emulsifier optionally being present completely or partly in salt form and the dispersions prepared having a ratio by weight of polymer to water of from 1 : 5 to 2 : 1.

2. A process as claimed in Claim 1, characterized in that polymerization is carried out in the presence of a mixed emulsifier of from 95 to 50 parts by weight and preferably from 90 to 70 parts by weight of the α-sulfocarboxylic acid alkyl ester containing from 8 to 24 and preferably from 12 to 18 carbon atoms in the carboxylic acid portion

*and* from 5 to 50 parts by weight and preferably from 10 to 30 parts by weight of the α-sulfocarboxylic acid containing from 8 to 24 carbon atoms and preferably from 12 to 18 carbon atoms.

3. A process as claimed in Claims 1 and 2, characterized in that the mixed emulsifier is used completely or partly in the form of an alkali salt, magnesium salt, calcium salt and/or ammonium salt.

4. A process as claimed in Claims 1 to 3, characterized in that the mixed emulsifier is used in quantities of from 0.5 to 10 % by weight, preferably in quantities of from 1 to 5 % by weight and, more preferably, in quantities of from 1.5 to 3 % by weight, based on the polymer dispersion.

5. A process as claimed in Claims 1 to 4, characterized in that the mixed emulsifier is used together with an anionic co-emulsifier and, if desired, a non-ionic coemulsifier, the quantity by weight of the mixed emulsifier preferably exceeding that of the co-emulsifiers.

6. A process as claimed in Claims 1 to 5, characterized in that the mixed emulsifier is used together with a non-ionic emulsifier, the quantity of the mixed emulsifier preferably exceeding the quantity of the non-ionic emulsifier.

7. A process as claimed in Claims 1 to 6, characterized in that the mixed emulsifier is used together with a protective colloid.

8. A process as claimed in Claims 1 to 7, characterized in that the polymer dispersions produced are based on aromatic vinyl compounds, monoolefins, diolefins, acrylic or methacrylic acid derivatives, vinyl esters, vinyl ethers, vinyl halides and/or mixtures thereof.

9. A process as claimed in claims 1 to 8, characterized in that the emulsion polymerization is carried out in the presence of up to 10 % by weight of water-soluble ethylenically unsaturated carboxylic acids.

10. A process as claimed in claims 1 to 9, characterized in that the ratio by weight of monomer to water is in the range from 1 : 4 to 2 : 1 and preferably in the range from 1 : 3 to 1 : 1.

## Revendications

1. Procédé pour la préparation de dispersions stables de polymères à faible tension superficielle, par polymérisation en émulsion de monomères à insaturation éthylénique, en présence d'esters alkyliques d'acides α-sulfocarboxyliques ayant de 8 à 24 atomes de carbone dans le fragment acide carboxylique, en tant qu'émulsifiants, ainsi que de substances auxiliaires usuelles, caractérisé en ce que l'on effectue la polymérisation en présence d'un émulsifiant mixte constitué de 99,5 à 10 parties en poids d'un ester alkylique d'acide α-sulfocarboxylique ayant de 8 à 24 atomes de carbone dans le fragment acide carboxylique et de 1 à 4 atomes de carbone dans le reste alcool, *et* de 0,5 à 90 parties en poids d'un acide α-sulfocarboxylique ayant de 8 à 24 atomes de carbone, et, si on le désire, d'autres émulsifiants anioniques et/ou non ioniques et/ou de colloïdes protecteurs, l'émulsifiant mixte pouvant se trouver en partie ou en totalité sous forme de sel, et les dispersions obtenues présentant un rapport pondéral des polymères à l'eau compris entre 1 : 5 et 2 : 1.

2. Procédé selon la revendication 1, caractérisé en ce que l'on effectue la polymérisation en présence d'un émulsifiant mixte constitué de 95 à 50 parties en poids, de préférence de 90 à 70 parties en poids de l'ester alkylique d'acide α-sulfocarboxylique ayant de 8 à 24, de préférence de 12 à 18 atomes de carbone dans la fraction acide carboxylique *et* et de 5 à 50 parties en poids, de préférence de 10 à 30 parties en poids de l'acide α-sulfocarboxylique ayant de 8 à 24 atomes de carbone, de préférence de 12 à 18 atomes de carbone.

3. Procédé selon les revendications 1 et 2, caractérisé en ce que l'on utilise l'émulsifiant mixte en partie ou en totalité sous forme de sel alcalin, de sel de magnésium, de sel de potassium ou de sel d'ammonium.

4. Procédé selon les revendications 1 à 3, caractérisé en ce que l'on utilise l'émulsifiant mixte en quantités de 0,5 à 10 % en poids, de préférence de 1 à 5 % en poids, et en particulier de 1,5 à 3 % en poids, par rapport à la dispersion de polymère.

5. Procédé selon les revendications 1 à 4, caractérisé en ce que l'on utilise l'émulsifiant mixte conjointement avec un co-émulsifiant anionique et, si on le désire, un co-émulsifiant non ionique, la quantité pondérale de l'émulsifiant mixte excédant de préférence celle des co-émulsifiants.

6. Procédé selon les revendications 1 à 5, caractérisé en ce que l'on utilise l'émulsifiant conjointement avec un émulsifiant non ionique, la quantité de l'émulsifiant mixte excédant de préférence la quantité de l'émulsifiant non ionique.

7. Procédé selon les revendications 1 à 6, caractérisé en ce que l'on utilise l'émulsifiant mixte conjointement avec un colloïde protecteur.

8. Procédé selon les revendications 1 à 7, caractérisé en ce que l'on prépare des dispersions de polymères à base de composés vinylaromatiques, monooléfines, dioléfines, dérivés d'acide acrylique ou méthacrylique, esters vinyliques, éthers vinyliques, halogénures de vinyle et/ou de mélanges de ceux-ci.

9. Procédé selon l'une quelconque des revendications 1 à 8, caractérisé en ce que l'on effectue la polymérisation en émulsion en présence de jusqu'à 10 % en poids d'acides carboxyliques à insaturation éthylénique, solubles dans l'eau.

10. Procédé selon les revendications 1 à 9, caractérisé en ce que le rapport du poids des monomères avec l'eau se situe dans la plage de 1 : 4 à 2 : 1, de préférence de 1 : 3 à 1 : 1.